# EUROPEAN PATENT APPLICATION

(11) **EP 4 810 817 A1**
(43) Date of publication of application: **23.09.2026**
(21) Application number: 25758684.2
(22) Date of filing: 06.02.2025
(51) Int. Cl.: F16D 3/223, F16D 3/2233, F16D 3/2237

(54) **CONSTANT VELOCITY JOINT**

(30) Priority: 23.02.2024 KR 20240026156
(71) Applicant: Hansae Mobility Co., Ltd., Daegu 42981 (KR)
(72) Inventor: SEO, Jong Uk, Dalseong-Gun Daegu 42981 (KR); JANG, Dal Soo, Dalseong-Gun Daegu 42981 (KR)
(74) Representative: Manitz Finsterwald Patent- und Rechtsanwaltspartnerschaft mbB
(86) International application number: PCT/KR2025/099277
(87) International publication number: WO 2025/178435

(57) **Abstract**

A constant velocity joint comprises: an outer joint member defining a longitudinal axis and including a first outer ball track and a second outer ball track; an inner joint member including a first inner ball track paired with the first outer ball track, and a second inner ball track paired with the second outer ball track; a plurality of balls; and a ball cage accommodating the plurality of balls. The outer joint member includes an open side and a joint side facing each other along the longitudinal axis. The pair of the first outer ball track and the first inner ball track forms a first aperture angle facing toward the open side in a non-articulated state, and the pair of the second outer ball track and the second inner ball track forms a second aperture angle facing toward the joint side in a non-articulated state. A center line of the first outer ball track includes a first joint-side arc through which a joint center plane passes, and a first open-side arc continuing from the first joint-side arc. A center line of the second outer ball track includes a middle arc through which the joint center plane passes, and a second joint-side arc and a second open-side arc respectively continuing from both sides of the middle arc.

## Description

### [Technical Field]

The present disclosure relates to a constant velocity joint used to transmit a rotational driving force.

### [Background Art]

A constant velocity joint acting as a power transmission member is an element constituting a part of a drive system that transmits a driving force generated from a power source of a vehicle, for example, an internal combustion engine or an electric motor. As is known, the constant velocity joint is configured to be capable of transmitting a rotational driving force while allowing an angular displacement and an axial length displacement occurring during driving of the vehicle.

A so-called fixed constant velocity joint includes an outer joint member, an inner joint member, a plurality of balls disposed in an outer ball track of the outer joint member and an inner ball track of the inner joint member, and a ball cage accommodating the plurality of balls. The balls are rotatably supported on contact surfaces of an outer ball groove and an inner ball groove, respectively, thereby transmitting torque between the outer joint member and the inner joint member. Among these fixed constant velocity joints, there is a constant velocity joint of a type in which some of pairs of the outer ball tracks and the inner ball tracks have an aperture angle facing toward an open side from a joint center plane, and the remainders have an aperture angle facing toward a joint side from the joint center plane, a so-called counter track joint. Such a counter track joint has advantages in various aspects, but has room for improvement in aspects such as a maximum articulation angle, efficiency, and durability improvement.

The matters described in the technical field section constituting the background of this invention are prepared to enhance the understanding of the background of the invention, and may include matters that are not prior art already known in the field to which this technology belongs.

- Prior Art Document: U.S. Patent Registration Publication No. US7,396,285

### [Summary of the Invention]

### [Technical Problem]

A technical problem to be solved by the present invention is to provide a counter track type constant velocity joint that not only achieves a large maximum articulation angle but also has improved durability and efficiency.

The technical problems to be achieved by the present invention are not limited to the technical problems mentioned above, and other technical problems not mentioned will be understood by those skilled in the art to which the present invention belongs from the description below.

### [Technical Solution]

A constant velocity joint according to an embodiment of the present invention comprises: an outer joint member defining a longitudinal axis and including a first outer ball track and a second outer ball track; an inner joint member including a first inner ball track paired with the first outer ball track, and a second inner ball track paired with the second outer ball track; a plurality of balls respectively disposed in pairs of the first outer ball track and the first inner ball track, and pairs of the second outer ball track and the second inner ball track; and a ball cage disposed between the outer joint member and the inner joint member and accommodating the plurality of balls. The outer joint member includes an open side and a joint side facing each other along the longitudinal axis. The pair of the first outer ball track and the first inner ball track forms a first aperture angle facing toward the open side in a non-articulated state, and the pair of the second outer ball track and the second inner ball track forms a second aperture angle facing toward the joint side in a non-articulated state. A center line of the first outer ball track includes a first joint-side arc through which a joint center plane passes, and a first open-side arc continuing from the first joint-side arc. A center line of the second outer ball track includes a middle arc through which the joint center plane passes, and a second joint-side arc and a second open-side arc respectively continuing from both sides of the middle arc.

The first joint-side arc may have a curvature convex radially outward, and the first open-side arc may have a curvature convex radially inward, and the second joint-side arc and the middle arc may each have a curvature convex radially outward, and the second open-side arc may have a curvature convex radially inward.

A center of curvature of the first joint-side arc may be spaced apart from the joint center plane to form a first axial offset, a center of curvature of the middle arc may be spaced apart from the joint center plane to form a second axial offset, and the first axial offset and the second axial offset may be located in opposite directions to each other with respect to the joint center plane.

The first axial offset may face from the joint center plane toward the open side, and the second axial offset may face from the joint center plane toward the joint side.

The center of curvature of the first joint-side arc and the center of curvature of the middle arc may be located on the longitudinal axis.

A turning point connecting the first joint-side arc and the first open-side arc may be spaced apart toward the open side from a plane perpendicular to the longitudinal axis while passing through the center of curvature of the first joint-side arc, and a turning point connecting the middle arc and the second open-side arc may be spaced apart from the joint center plane toward the open side.

The center of curvature of the first joint-side arc may be spaced apart from the joint center plane toward the open side, and the center of curvature of the first open-side arc may be located radially outward of the outer joint member. The center of curvature of the middle arc may be spaced apart from the joint center plane toward the joint side. The center of curvature of the second joint-side arc may be spaced apart toward the joint side from a plane perpendicular to the longitudinal axis while passing through the center of curvature of the middle arc, and the center of curvature of the second open-side arc may be located radially outward of the outer joint member.

The radius of curvature of the first joint-side arc may be smaller than the radius of curvature of the first open-side arc, and the radius of curvature of the second joint-side arc may be smaller than the radius of curvature of the middle arc and larger than the radius of curvature of the second open-side arc.

The radius of curvature of the first open-side arc may be larger than the radius of curvature of the second open-side arc.

### [Effects of the Invention]

According to the present invention, by adjusting a track center line of a pair of ball tracks having an aperture angle facing toward an open side in a non-articulated state and a track center line of a pair of ball tracks having an aperture angle facing toward a joint side in the non-articulated state, a constant velocity joint having a large maximum articulation angle and improved durability and efficiency can be implemented.

In addition, various effects that can be obtained or predicted by the embodiments of the present invention are disclosed directly or implicitly in the detailed description of the embodiments of the present invention.

### [Brief Description of the Drawings]

The drawings attached hereto are provided to facilitate understanding of the present invention, and provide embodiments of the present invention together with the detailed description. However, the technical features of the present invention are not limited to specific drawings, and the features disclosed in each drawing may be combined with each other to constitute a new embodiment. The embodiments of the present specification may be better understood by reference to the following description in conjunction with the accompanying drawings, in which like reference numerals refer to identical or functionally similar elements.
Fig. 1 is a front view of a constant velocity joint according to an embodiment of the present invention.
Fig. 2 is an exploded perspective view of a constant velocity joint according to an embodiment of the present invention.
Fig. 3 is a cross-sectional view taken along line A-A of Fig. 1.
Fig. 4 is a cross-sectional view taken along line B-B of Fig. 1.
Fig. 5 is a view showing a center line of an outer ball track of the outer joint member shown in Fig. 3.
Fig. 6 is a view showing a center line of an inner ball track of the inner joint member shown in Fig. 3.
Fig. 7 is a view showing a center line of an outer ball track of the outer joint member shown in Fig. 4.
Fig. 8 is a view showing a center line of an inner ball track of the inner joint member shown in Fig. 4.

It should be understood that the drawings referenced above are not necessarily illustrated to scale, and present simplified representations of various features illustrating the basic principles of the present invention. For example, specific design features of the present invention, including specific dimensions, orientations, locations, and shapes, will be determined in part by a specific intended application and usage environment.

### [Embodiments for Carrying out the Invention]

Hereinafter, embodiments of the present invention will be described in detail with reference to the accompanying drawings so that those of ordinary skill in the art to which the present invention belongs can easily implement the same. However, the present invention may be implemented in various different forms and is not limited to the embodiments described herein.

The terminology used herein is for the purpose of describing specific embodiments only and is not intended to be limiting of the present invention. As used herein, the singular forms are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, components, and/or groups thereof. As used herein, the term "and/or" includes any and all combinations of one or more of the associated listed items. The term "coupled" indicates a physical relationship between two components where the components are directly connected to each other or indirectly connected through one or more intermediary components.

In describing the components of the present invention, when a component is described as being "connected", "coupled", or "attached" to another component, it should be understood that the component may be directly connected, coupled, or attached to the other component, but another component may be "connected", "coupled", or "attached" between the respective components.

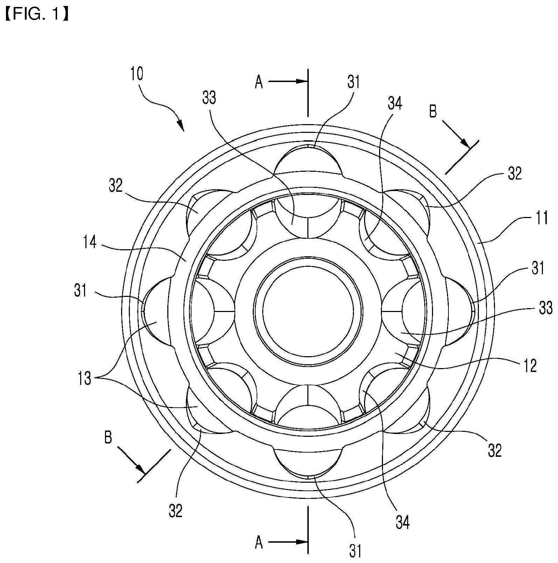

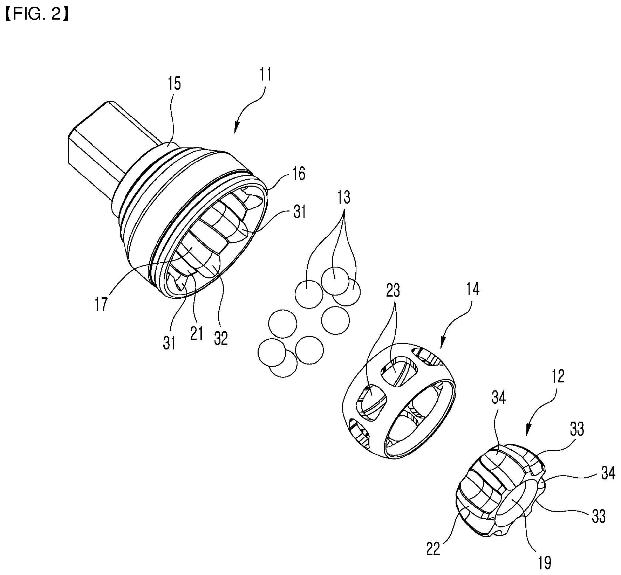

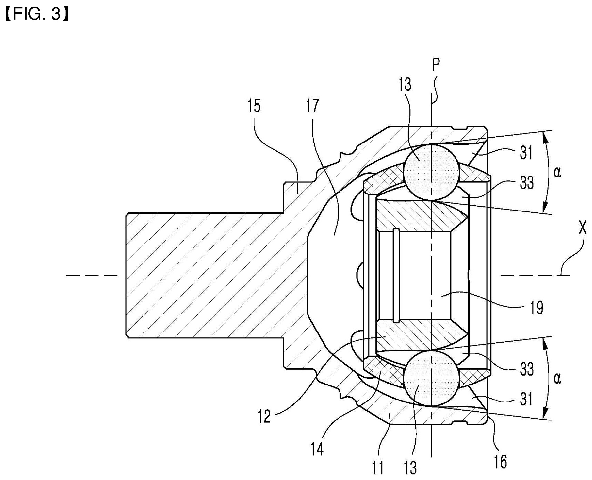

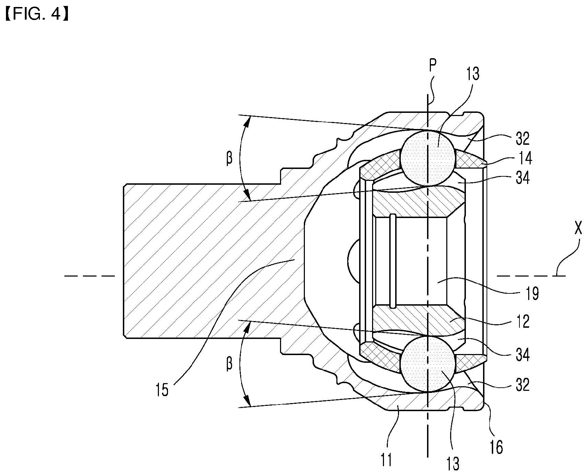

Fig. 1 is a front view of a constant velocity joint according to an embodiment of the present invention, and Fig. 2 is an exploded perspective view of a constant velocity joint according to an embodiment of the present invention. Fig. 3 is a cross-sectional view taken along line A-A of Fig. 1, and Fig. 4 is a cross-sectional view taken along line B-B of Fig. 1. Referring to Figs. 1 to 4, the constant velocity joint 10 includes an outer joint member 11, an inner joint member 12, a plurality of balls 13, and a ball cage 14. Although not explicitly shown in the drawings, the outer joint member 11 and the inner joint member 12 may be respectively connected to different power transmission elements. The outer joint member 11 and the inner joint member 12 rotate at a constant velocity by the action of the balls 13, whereby rotational power, that is, torque transmission, between the power transmission elements respectively connected to the outer joint member 11 and the inner joint member 12 can be achieved.

The outer joint member 11 having a substantially U-shape includes a joint side 15 of a closed structure, an open side 16, and an internal space 17. The outer joint member 11 forms a longitudinal axis X, and the joint side 15 and the open side 16 are positioned to face each other along the longitudinal axis X. The inner joint member 12 is inserted into the internal space 17 of the outer joint 11 through the open side 16. The inner joint member 12 includes a through-hole 19 formed along a longitudinal direction, and a power transmission element is inserted into the through-hole 19 and may be fastened to rotate together with the inner joint member 12, for example, fastened through spline coupling of a shaft.

An inner peripheral surface 21 forming the internal space 17 of the outer joint member 11 has a substantially sphere shape, and correspondingly, an outer peripheral surface 22 of the inner joint member 12 may have a substantially sphere shape. In addition, correspondingly, the ball cage 14 may be provided with an outer peripheral surface and an inner peripheral surface of a substantially sphere shape. The outer peripheral surface of the ball cage 14 faces the inner peripheral surface 21 of the outer joint member 11, and the inner peripheral surface of the ball cage 14 faces the outer peripheral surface 22 of the inner joint member 12. The ball cage 14 includes a plurality of windows 23 respectively accommodating the plurality of balls 13. As is known, articulation of the inner joint member 12 relative to the outer joint member 11 can be performed. Figs. 1, 3, and 4 illustrate a case where the outer joint member 11 and the inner joint member 12 are in an aligned state, that is, a non-articulated state, and in an articulated state, a relative angular displacement between the inner joint member 12 and the outer joint member 11 occurs. When articulation between the outer joint member 11 and the inner joint member 12 occurs, an angular displacement of the ball cage 14 occurs together, and at this time, a positional displacement of the balls 13 also occurs.

The outer joint member 11 includes a plurality of first and second outer ball tracks 31 and 32 formed on the inner peripheral surface 21, and correspondingly, the inner joint member 12 includes a plurality of first and second inner ball tracks 33 and 34 on the outer peripheral surface 22. The first outer ball track 31 and the first inner ball track 33 form a pair, and the second outer ball track 32 and the second inner ball track 34 form a pair. Four first outer ball tracks 31 and four second outer ball tracks 32 may be provided, and the first outer ball tracks 31 and the second outer ball tracks 32 may be alternately arranged at equal intervals along a circumferential direction. Eight balls 13 may be provided, and the balls 13 may be respectively disposed in pairs of the outer ball tracks 31 and 32 and the inner ball tracks 33 and 34. As shown in Figs. 1, 3, and 4, the pairs of the first outer and inner ball tracks 31 and 33 are arranged to face each other, and the pairs of the second outer and inner ball tracks 32 and 34 are arranged to face each other.

Referring to Figs. 3 and 4, the pair of the first outer ball track 31 and the first inner ball track 33 forms a first aperture angle α facing toward the open side 16 in the non-articulated state, and the pair of the second outer ball track 32 and the second inner ball track 34 forms a second aperture angle β facing toward the joint side 15 in the non-articulated state. Here, the concept of the aperture angle is generally known in the technical field to which the present invention belongs, and may mean an angle formed between a center trajectory of a ball moving on the outer ball track and a center trajectory of a ball moving on the inner ball track. As shown in Figs. 3 and 4, a joint center plane P is defined by the centers of the plurality of balls 13 in the non-articulated state of the constant velocity joint.

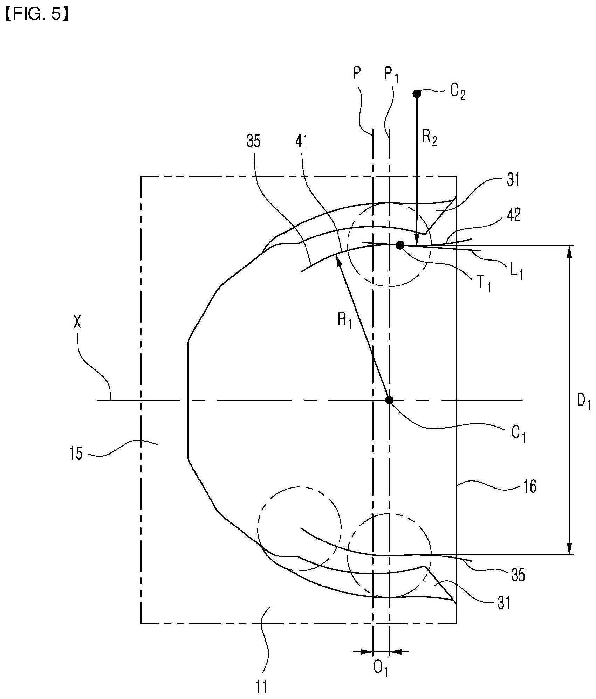

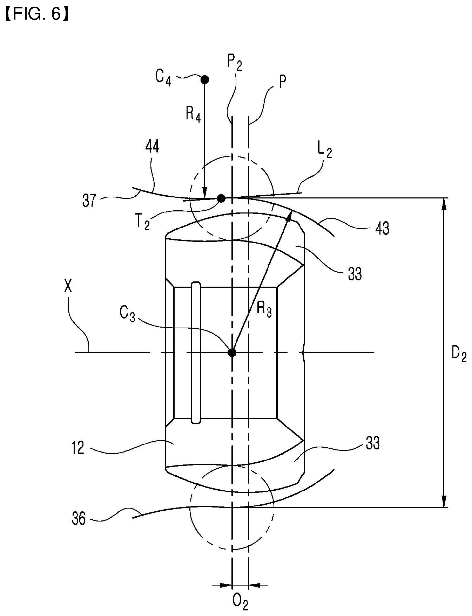

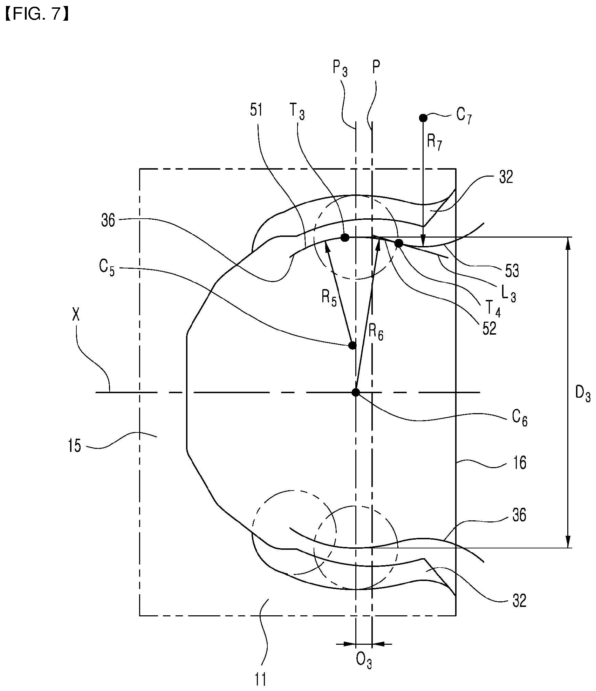

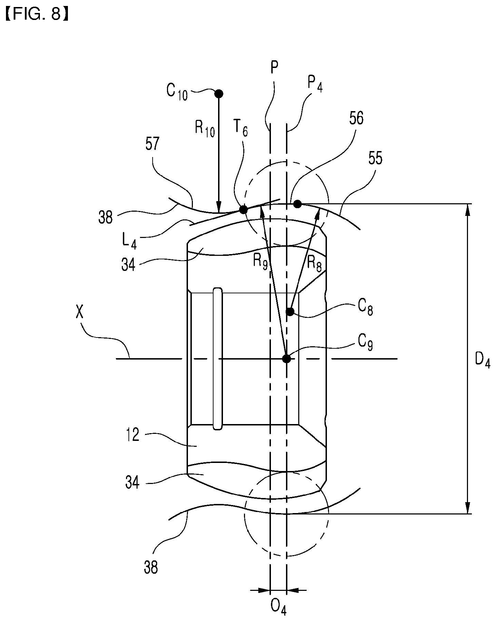

Referring to Figs. 5 to 8, the first and second outer ball tracks 31 and 32 are provided with center lines 35 and 36, respectively, and the first and second inner ball tracks 33 and 34 are provided with center lines 37 and 38, respectively. Here, the center line can be understood to mean a center trajectory of a ball moving on the ball track. In Fig. 5, the first outer ball track 31 of the outer joint member 11 and its center line 35 are illustrated, and in Fig. 6, the first inner ball track 33 of the inner joint member 12 and its center line 37 are illustrated. In Fig. 7, the second outer ball track 32 of the outer joint member 11 and its center line 36 are illustrated, and in Fig. 8, the second inner ball track 34 of the inner joint member 12 and its center line 38 are illustrated.

Referring to Fig. 5, the center line 35 of the first outer ball track 31 includes two arcs 41 and 42 connected by a turning point T₁. The joint center plane P passes through the joint-side arc 41. The joint-side arc 41 positioned close to the joint side 15 and the open-side arc 42 positioned close to the open side 16 have curvatures in opposite directions to each other with respect to a radial direction. The joint-side arc 41 has a curvature convex radially outward with respect to the longitudinal axis X, and the open-side arc 42 has a curvature convex radially inward. Specifically, the joint-side arc 41 has a center of curvature C₁ positioned on the longitudinal axis X, and the open-side arc 42 has a center of curvature C₂ positioned outside the outer joint member 11. At this time, a radius of curvature R₁ of the joint-side arc 41 is formed to be smaller than a radius of curvature R₂ of the open-side arc 42.

The turning point T₁ is configured to form an inflection point between the two arcs 41 and 42. Here, as shown in Fig. 5, the joint-side arc 41 is positioned radially inward of a tangent line L₁ at the turning point T₁, and the open-side arc 42 is positioned radially outward of the tangent line L₁ at the turning point T₁.

The center of curvature C₁ of the joint-side arc 41 is formed to be spaced apart from the joint center plane P toward the open side 16 to have an axial offset O₁. That is, a center of curvature plane P₁ that is perpendicular to the longitudinal axis X and includes the center of curvature C₁ is spaced apart from the joint center plane P by the axial offset O₁ toward the open side 16 along an axial direction. In addition, the turning point T₁ is spaced apart from the center of curvature plane P₁ toward the open side 16. In the non-articulated state, a ratio (= O₁/D₁) of the axial offset O₁ of the center of curvature C₁ to a diameter of a circle formed by the centers of the plurality of balls 13, a so-called BCD (Ball Circle Diameter) (D₁), may fall within a range of 0.050 to 0.054.

The center line 37 of the first inner ball track 33 paired with the first outer ball track 31 is formed to be substantially symmetrical with the center line 35 of the first outer ball track 31 with respect to the joint center plane P. Referring to Fig. 6, the center line 37 of the first inner ball track 33 includes two arcs 43 and 44 connected by a turning point T₂. The open-side arc 43 positioned close to the open side 16 and the joint-side arc 44 positioned close to the joint side 15 have curvatures in opposite directions to each other with respect to a radial direction. The open-side arc 43 has a curvature convex radially outward with respect to the longitudinal axis X, and the joint-side arc 44 has a curvature convex radially inward. Specifically, the open-side arc 43 has a center of curvature C₃ positioned on the longitudinal axis X, and the joint-side arc 44 has a center of curvature C₄ positioned outside the inner joint member 12. At this time, a radius of curvature R₃ of the open-side arc 43 is formed to be smaller than a radius of curvature R₄ of the joint-side arc 44.

The turning point T₂ is configured to form an inflection point between the two arcs 43 and 44. Here, as shown in Fig. 6, the open-side arc 43 is positioned radially inward of a tangent line L₂ at the turning point T₂, and the joint-side arc 44 is positioned radially outward of the tangent line L₂ at the turning point T₂.

The center of curvature C₃ of the open-side arc 43 is formed to be spaced apart from the joint center plane P toward the joint side 15 to have an axial offset O₂. That is, a center of curvature plane P₂ that is perpendicular to the longitudinal axis X and includes the center of curvature C₃ is spaced apart from the joint center plane P by the axial offset O₂ toward the joint side 15 along an axial direction. In addition, the turning point T₂ is spaced apart from the center of curvature plane P₂ toward the joint side 15. In the non-articulated state, a ratio (= O₂/D₂) of the axial offset O₂ of the center of curvature C₃ to the BCD (D₂) of the plurality of balls 13 may fall within a range of 0.050 to 0.054.

Referring to Fig. 7, the center line 36 of the second outer ball track 32 includes three arcs 51, 52, and 53 sequentially connected by turning points T₃ and T₄. A joint-side arc 51 and an open-side arc 53 are positioned close to the joint side 15 and the open side 16, respectively, and a middle arc 52 is connected to the joint-side arc 51 and the open-side arc 53 through the turning points T₃ and T₄, respectively. At this time, the joint center plane P passes through the middle arc 52.

The joint-side arc 51 and the middle arc 52 have a curvature convex radially outward with respect to the longitudinal axis X, and the open-side arc 53 has a curvature convex radially inward. Specifically, the joint-side arc 51 has a center of curvature C₅ spaced radially outward toward a side close to the longitudinal axis X and a radius of curvature R₅, and the middle arc 52 has a center of curvature C₆ positioned on the longitudinal axis X and a radius of curvature R6. Accordingly, the radius of curvature R₅ of the joint-side arc 51 is smaller than the radius of curvature R₆ of the middle arc 52. Here, the center of curvature C₆ of the middle arc 52 is configured to be spaced apart from the joint center plane P toward the joint side 15 to have an axial offset O₃. In addition, a turning point T₃ connecting the joint-side arc 51 and the middle arc 52 is spaced apart toward the joint side 15 from a plane perpendicular to the longitudinal axis X while passing through the center of curvature C₆ of the middle arc 52, that is, a center of curvature plane P₃.

The open-side arc 53 is connected to the middle arc 52 by a turning point T₄ spaced apart from the joint center plane P toward the open side 16. The open-side arc 53 has a center of curvature C₇ positioned outside the outer joint member 11 and has a radius of curvature R₇. At this time, the radius of curvature R₇ of the open-side arc 53 is formed to be smaller than the radius of curvature R₅ of the joint-side arc 51, whereby the radius of curvature R₆ of the middle arc 52 is the largest and the radius of curvature R₇ of the open-side arc 53 is the smallest. Accordingly, in the middle portion of the second outer ball track 32, the amount of change in the radial position of the movement trajectory of the ball 13 becomes relatively gentle, enabling friction reduction and stable operation, and in the portion close to the open side 16, a relatively large amount of change occurs radially outward, making it possible to implement a high articulation angle.

A turning point T₄ connecting the middle arc 52 and the open-side arc 53 is configured to form an inflection point between the middle arc 52 and the open-side arc 53. Here, as shown in Fig. 7, the middle arc 52 is positioned radially inward of a tangent line L₃ of the center line 36 at the turning point T₄, and the open-side arc 53 is positioned radially outward of the tangent line L₃.

The center of curvature C₆ of the middle arc 52 is formed to be spaced apart from the joint center plane P toward the joint side 15 to have an axial offset O₃. That is, a center of curvature plane P₃ that is perpendicular to the longitudinal axis X and includes the center of curvature C₆ is spaced apart from the joint center plane P by the axial offset O₃ toward the joint side 15 along an axial direction. In addition, the turning point T₄ is spaced apart from the joint center plane P toward the open side 16. In the non-articulated state, a ratio (= O₃/D₃) of the axial offset O₃ of the center of curvature C₆ to the BCD (D₃) of the plurality of balls 13 may fall within a range of 0.050 to 0.054.

Referring to Figs. 5 and 7, the radius of curvature R₂ of the open-side arc 42 of the first outer ball track 31 is larger than the radius of curvature R₇ of the open-side arc 53 of the second outer ball track 32. This means that the amount of radial change at the open-side end portion of the second outer ball track 32 having the aperture angle facing toward the joint side 15 becomes relatively large, whereby a larger articulation angle can be implemented.

Referring to Figs. 5 and 7, the joint-side center line 41 of the first outer ball track 31 and the middle center line 52 of the second outer ball track 32 have offsets O₁ and O₃ of the same magnitude in opposite directions to each other with respect to the joint center plane P. Accordingly, during operation of the constant velocity joint, forces in a longitudinal direction acting on the balls 13 are canceled out, thereby reducing friction.

The center line 38 of the second inner ball track 34 paired with the second outer ball track 32 is formed to be substantially symmetrical with the center line 36 of the second outer ball track 32 with respect to the joint center plane P. Referring to Fig. 8, the center line 38 of the second inner ball track 34 includes three arcs 55, 56, and 57 sequentially connected by turning points T₅ and T₆. An open-side arc 55 and a joint-side arc 57 are positioned close to the open side 16 and the joint side 15, respectively, and a middle arc 56 is connected to the open-side arc 55 and the joint-side arc 57 through the turning points T₅ and T₆, respectively.

The open-side arc 55 and the middle arc 56 have a curvature convex radially outward with respect to the longitudinal axis X, and the joint-side arc 57 has a curvature convex radially inward. Specifically, the open-side arc 55 has a center of curvature C₈ spaced radially outward toward a side close to the longitudinal axis X and a radius of curvature R₈, and the middle arc 56 has a center of curvature C₉ positioned on the longitudinal axis X and a radius of curvature R₉. Accordingly, the radius of curvature R₈ of the open-side arc 55 is smaller than the radius of curvature R₉ of the middle arc 56. Here, the center of curvature C₉ of the middle arc 56 is configured to be spaced apart from the joint center plane P toward the open side 16 to have an axial offset O₄. In addition, a turning point T₆ connecting the open-side arc 55 and the middle arc 56 is spaced apart toward the open side 16 from a plane perpendicular to the longitudinal axis X while passing through the center of curvature C₉ of the middle arc 56, that is, a center of curvature plane P₄.

The joint-side arc 57 is connected to the middle arc 56 by a turning point T₆ spaced apart from the joint center plane P toward the joint side 15. The joint-side arc 57 has a center of curvature C₁₀ positioned outside the inner joint member 12 and has a radius of curvature R₁₀. At this time, the radius of curvature R₁₀ of the joint-side arc 57 is formed to be smaller than the radius of curvature R₈ of the open-side arc 55, whereby the radius of curvature R₉ of the middle arc 56 is the largest and the radius of curvature R₁₀ of the joint-side arc 57 is the smallest.

A turning point T₆ connecting the middle arc 56 and the joint-side arc 57 is configured to form an inflection point between the middle arc 56 and the joint-side arc 57. Here, as shown in Fig. 8, the middle arc 56 is positioned radially inward of a tangent line L₄ of the center line 38 at the turning point T₆, and the joint-side arc 57 is positioned radially outward of the tangent line L₄.

The center of curvature C₉ of the middle arc 56 is formed to be spaced apart from the joint center plane P toward the open side 16 to have an axial offset O₄. That is, a center of curvature plane P₄ that is perpendicular to the longitudinal axis X and includes the center of curvature C₉ is spaced apart from the joint center plane P by the axial offset O₄ toward the open side 16 along an axial direction. In addition, the turning point T₆ is spaced apart from the joint center plane P toward the joint side 15. In the non-articulated state, a ratio (= O₄/D₄) of the axial offset O₄ of the center of curvature C₉ to the BCD (D₄) of the plurality of balls 13 may fall within a range of 0.050 to 0.054.

Although the embodiments of the present invention have been described above, the scope of rights of the present invention is not limited thereto, and includes all changes and modifications that are easily changed from the embodiments of the present invention by a person of ordinary skill in the art to which the present invention belongs and are recognized as equivalent.

## Claims

1. A constant velocity joint comprising: an outer joint member defining a longitudinal axis and including a first outer ball track and a second outer ball track;
an inner joint member including a first inner ball track paired with the first outer ball track, and a second inner ball track paired with the second outer ball track;
a plurality of balls respectively disposed in pairs of the first outer ball track and the first inner ball track, and pairs of the second outer ball track and the second inner ball track; and
a ball cage disposed between the outer joint member and the inner joint member and accommodating the plurality of balls,
wherein the outer joint member includes an open side and a joint side facing each other along the longitudinal axis,
wherein the pair of the first outer ball track and the first inner ball track forms a first aperture angle facing toward the open side in a non-articulated state,
wherein the pair of the second outer ball track and the second inner ball track forms a second aperture angle facing toward the joint side in a non-articulated state,
wherein a center line of the first outer ball track includes a first joint-side arc through which a joint center plane passes, and a first open-side arc continuing from the first joint-side arc, and
wherein a center line of the second outer ball track includes a middle arc through which the joint center plane passes, and a second joint-side arc and a second open-side arc respectively continuing from both sides of the middle arc.

2. The constant velocity joint according to claim 1, wherein the first joint-side arc has a curvature convex radially outward, and the first open-side arc has a curvature convex radially inward, and
wherein the second joint-side arc and the middle arc each have a curvature convex radially outward, and the second open-side arc has a curvature convex radially inward.

3. The constant velocity joint according to claim 2, wherein a center of curvature of the first joint-side arc is spaced apart from the joint center plane to form a first axial offset,
wherein a center of curvature of the middle arc is spaced apart from the joint center plane to form a second axial offset, and
wherein the first axial offset and the second axial offset are located in opposite directions to each other with respect to the joint center plane.

4. The constant velocity joint according to claim 3, wherein the first axial offset faces from the joint center plane toward the open side, and
wherein the second axial offset faces from the joint center plane toward the joint side.

5. The constant velocity joint according to claim 4, wherein the center of curvature of the first joint-side arc and the center of curvature of the middle arc are located on the longitudinal axis.

6. The constant velocity joint according to claim 4, wherein a turning point connecting the first joint-side arc and the first open-side arc is spaced apart toward the open side from a plane perpendicular to the longitudinal axis while passing through the center of curvature of the first joint-side arc, and
wherein a turning point connecting the middle arc and the second open-side arc is spaced apart from the joint center plane toward the open side.

7. The constant velocity joint according to claim 2, wherein the center of curvature of the first joint-side arc is spaced apart from the joint center plane toward the open side,
wherein a center of curvature of the first open-side arc is located radially outward of the outer joint member,
wherein the center of curvature of the middle arc is spaced apart from the joint center plane toward the joint side,
wherein a center of curvature of the second joint-side arc is spaced apart toward the joint side from a plane perpendicular to the longitudinal axis while passing through the center of curvature of the middle arc, and
wherein a center of curvature of the second open-side arc is located radially outward of the outer joint member.

8. The constant velocity joint according to claim 7, wherein a radius of curvature of the first joint-side arc is smaller than a radius of curvature of the first open-side arc, and
wherein a radius of curvature of the second joint-side arc is smaller than a radius of curvature of the middle arc and larger than a radius of curvature of the second open-side arc.

9. The constant velocity joint according to claim 7, wherein the radius of curvature of the first open-side arc is larger than the radius of curvature of the second open-side arc.
